# FASCICULE DE BREVET EUROPEEN

(11) **EP 4 279 714 B1**
(45) Date de publication et mention de la délivrance du brevet: **02.04.2025**
(21) Numéro de dépôt: 23174415.2
(22) Date de dépôt: 22.05.2023
(51) Int. Cl.: F01N 3/10, F01N 3/32, F01N 3/20, B60K 15/035

(54) **MOTEUR À COMBUSTION INTERNE ET PROCÉDÉ DE PILOTAGE DE CE MOTEUR**
BRENNKRAFTMASCHINE UND VERFAHREN ZUR STEUERUNG DERSELBEN
INTERNAL COMBUSTION ENGINE AND METHOD FOR CONTROLLING THE SAME

(30) Priorité: 20.05.2022 FR 2204888
(43) Date de publication de la demande: 22.11.2023
(73) Titulaire: Renault s.a.s, 92100 Boulogne Billancourt (FR)
(72) Inventeur: Nuss, Julien, 78084 Guyancourt (FR); Sonnet, Francois, 78084 Guyancourt (FR)

(56) Documents cités:
- FR-A1- 2 778 206
- US-A1- 2020 309 069

## Description

### DOMAINE TECHNIQUE DE L'INVENTION

La présente invention concerne de manière générale la réduction des émissions polluantes des moteurs à combustion interne.

Elle concerne plus particulièrement un moteur à combustion interne selon les caractéristiques de la revendication 1.

L'invention trouve une application particulièrement avantageuse dans les moteurs à allumage commandé (dits « à essence »).

Elle concerne également un procédé de pilotage d'un tel moteur à combustion interne. Elle concerne aussi un véhicule automobile équipé d'un tel moteur à combustion interne.

### ETAT DE LA TECHNIQUE

On recherche actuellement, dans un cadre législatif toujours plus contraignant et dans un souci de préservation de l'environnement, des solutions techniques permettant d'améliorer le fonctionnement des moteurs à combustion interne, notamment pour réduire le taux d'éléments polluants contenus dans les gaz brûlés rejetés par les moteurs dans l'atmosphère.

Pour réduire ces émissions polluantes, un moteur à combustion interne comporte généralement une ligne de purge de vapeurs de carburant vers le moteur. Une telle ligne permet d'éviter que les vapeurs de carburant contenues dans le réservoir de carburant ne s'échappent dans l'atmosphère.

Un moteur comporte généralement aussi une ligne d'échappement comprenant un catalyseur de dépollution des gaz brûlés du moteur, notamment un catalyseur trois voies dans le cas d'un moteur à essence, au sein duquel des réactions chimiques se produisent afin de transformer des composés polluants en composés sans effet sur la santé.

Il a été montré qu'un tel catalyseur fonctionne de manière optimale sur une plage de températures comprise entre 150 et 350 degrés Celsius. Il présente en revanche des performances fortement réduites à température ambiante, juste après le démarrage à froid du moteur. Une solution pour améliorer l'efficacité du catalyseur consiste à le chauffer avant le démarrage du moteur.

Le document FR-A1-2778206 propose ainsi de placer une grille de préchauffage à l'entrée du catalyseur, et de prévoir une pompe pour faire circuler de l'air au travers de cette grille et du catalyseur avant tout démarrage à froid du moteur.

Cette solution, bien qu'efficace, nécessite toutefois l'ajout d'une pompe dédiée engendrant un coût, un poids et un encombrement non négligeables. Il est également connu le document US2020/309069A1.

### PRESENTATION DE L'INVENTION

Afin de remédier aux inconvénients précités de l'état de la technique, la présente invention propose d'utiliser la pompe présente dans la ligne de purge des vapeurs de carburant pour faire circuler de l'air au travers des moyens de chauffage du catalyseur afin de réchauffer ce dernier.

Plus particulièrement, on propose selon l'invention un moteur à combustion interne tel que défini dans la revendication 1.

D'autres caractéristiques avantageuses et non limitatives du moteur à combustion interne conforme à l'invention, prises individuellement ou selon toutes les combinaisons techniquement possibles, sont les suivantes :
- il est prévu un calculateur qui est adapté à piloter ladite vanne principale entre au moins deux états, dont :
   a1) un état permettant de faire communiquer le réservoir de carburant avec la ligne d'admission et de bloquer la circulation de gaz dans la ligne de soufflage, et
   b1) un état permettant de faire communiquer la pompe vers la ligne d'échappement via la ligne de soufflage et de bloquer la circulation de gaz entre le réservoir de carburant et la ligne d'admission ;
- la ligne de soufflage comporte une vanne anti-retour adaptée à empêcher les gaz de refluer vers ladite vanne principale ;
- la ligne de purge comporte une vanne bistable adaptée à fermer ou laisser passer les gaz ;
- la vanne principale est commandée électriquement.

L'invention porte aussi sur un véhicule automobile comportant un moteur à combustion interne tel que précité.

Elle porte également sur un procédé de pilotage d'un moteur à combustion interne tel que précité, dans lequel :
a2) préalablement à un démarrage à froid du moteur à combustion interne, le moyen de chauffage et la pompe sont activés et la vanne principale est pilotée pour faire communiquer la pompe avec la ligne d'échappement via la ligne de soufflage, et
b2) après le démarrage du moteur à combustion interne, la vanne principale est pilotée pour faire communiquer la pompe avec la ligne d'admission.

Préférentiellement, après l'arrêt du moteur à combustion interne, la pompe est activée et la vanne principale est pilotée pour faire communiquer la pompe avec la ligne d'échappement via la ligne de soufflage.

### DESCRIPTION DETAILLEE DE L'INVENTION

La description qui va suivre en regard des dessins annexés, donnés à titre d'exemples non limitatifs, fera bien comprendre en quoi consiste l'invention et comment elle peut être réalisée.

Sur les dessins annexés :
[Fig. 1] est une vue schématique d'un moteur à combustion interne selon l'invention, dans lequel la vanne principale est pilotée dans un premier état ;
[Fig. 2] est une vue schématique du moteur à combustion interne de la figure 1, dans lequel la vanne principale est pilotée dans un deuxième état.

En préliminaire, on notera que les termes « amont » et « aval » seront utilisés suivant le sens normal de l'écoulement des gaz, notamment depuis le point de prélèvement des gaz frais dans l'atmosphère jusqu'à la sortie des gaz brûlés hors du moteur. Ils permettront d'orienter les éléments d'une ligne de conduite de gaz les uns par rapport aux autres.

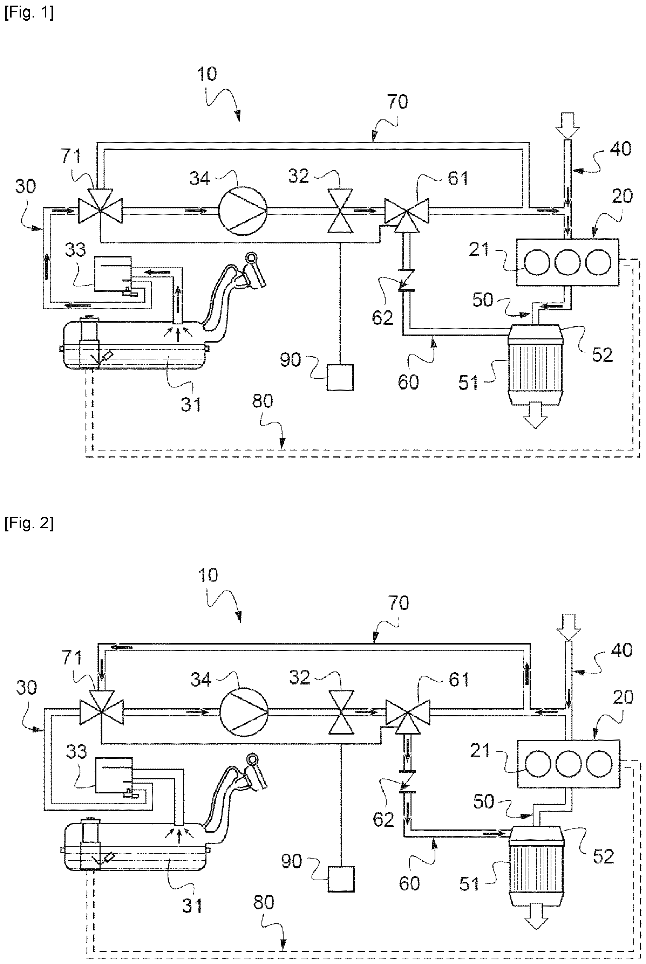

Sur les figures 1 et 2, on a représenté schématiquement un moteur à combustion interne 10 destiné par exemple à équiper un véhicule automobile.

Le moteur à combustion interne 10 comprend un bloc-moteur 20 pourvu d'un vilebrequin et de pistons (non représentés) respectivement logés dans des cylindres 21. Ces cylindres 21, par exemple au nombre de trois, délimitent ensemble, avec leurs pistons respectifs, une chambre de combustion.

Le moteur à combustion interne 10 est ici du type à allumage commandé (à Essence, GPL...). Il comporte un circuit d'allumage qui comprend notamment des bougies (non représentées) débouchant chacune dans un cylindre 21 de façon à pouvoir y produire des étincelles d'allumage d'un mélange de combustion (du carburant et des gaz frais).

En amont des cylindres 21, le moteur à combustion interne 10 comporte une ligne d'admission 40 de gaz frais qui prélève des gaz frais dans l'atmosphère et les conduit vers chacun des cylindres 21 du bloc-moteur 20. Ces gaz frais sont préférentiellement de l'air frais issus de l'atmosphère.

Cette ligne d'admission 40 comporte au moins un filtre à air (non représenté).

Il est prévu un réservoir de carburant 31 pour stocker une quantité variable de carburant, qui baisse progressivement lorsque le moteur fonctionne, si bien qu'on trouve généralement un volume d'air au-dessus du niveau de carburant. Ce volume d'air est rempli de vapeurs de carburant.

Pour éviter que ces vapeurs ne se trouvent dangereusement comprimées, par exemple lorsque le véhicule est au soleil, il est prévu une ligne de purge 30 de ces vapeurs qui prend naissance dans le réservoir de carburant 31.

Pour éviter que ces vapeurs ne soient alors rejetées dans l'atmosphère, ce qui serait source de pollution de l'air, cette ligne de purge 30 comporte un adsorbeur d'hydrocarbures volatils, qui constitue un réservoir de stockage des vapeurs de carburant 33, communément appelé « canister » 33, et elle débouche dans la ligne d'admission 40 en amont du bloc-moteur 20.

La ligne de purge 30 peut comporter une vanne bistable 32 permettant d'ouvrir ou de fermer la circulation des gaz dans cette ligne de purge.

Classiquement, le canister 33 contient du charbon actif apte à adsorber les molécules d'hydrocarbures en suspension dans les gaz contenus à l'intérieur du réservoir de carburant 31.

La ligne de purge 30 comporte une pompe 34 permettant d'aspirer des gaz au travers du canister 33 pour qu'ils se chargent en hydrocarbures et soient ensuite rejetés dans la ligne d'admission 40.

Ces gaz sont ensuite brulés dans le bloc-moteur 20.

En sortie du bloc-moteur 21, le moteur à combustion interne 10 comporte une ligne d'échappement 50. Cette dernière comporte au moins un catalyseur 51 de dépollution des gaz brûlés émis par le moteur.

S'agissant d'un moteur à essence, il s'agit notamment d'un catalyseur « trois voies » en ce sens qu'il est prévu pour, d'une part, oxyder les hydrocarbures imbrûlés HC et le monoxyde de carbone CO contenus dans les gaz brûlés, et d'autre part, réduire les oxydes d'azote NOx.

Ce catalyseur 51 a une efficacité optimale lorsque sa température est comprise entre 150°C et 350°C, cet intervalle étant appelé plage de températures optimales. En deçà de cette plage de températures optimales et notamment à température ambiante, l'efficacité du catalyseur 51 est fortement dégradée.

Après un démarrage à froid du moteur (c'est-à-dire alors qu'il est à température ambiante), quelques dizaines de secondes sont nécessaires pour que les gaz brûlés circulant dans le catalyseur 51 lui fassent atteindre cette plage de températures optimales. Il existe alors un risque de rejeter une grande quantité de gaz polluants dans l'atmosphère lors de cette phase de mise en température.

Pour chauffer le catalyseur 51 rapidement et éviter de rejeter des gaz polluants, la ligne d'échappement 50 de gaz brulés comprend un moyen de chauffage 52 situé dans ou en amont du catalyseur 51. Ce moyen de chauffage 52 peut notamment être une grille de chauffage électrique placée à l'entrée du catalyseur 51.

Afin de réduire l'encombrement du moteur à combustion interne 10 et d'éviter la présence d'une pompe dédiée, la pompe 34 située dans la ligne de purge 30 est également utilisée pour amener des gaz frais vers le moyen de chauffage 52 du catalyseur 51. Pour cela, il est prévu que le moteur à combustion interne 10 comporte une ligne de soufflage 60 prenant naissance dans la ligne de purge 30, en aval de la pompe 34 et débouchant dans la ligne d'échappement 50, en amont du moyen de chauffage 52.

Il est en outre prévu une vanne principale 61 située à la jonction entre la ligne de purge 30 et la ligne de soufflage 60, dont la fonction est d'envoyer les gaz qui la traversent soit vers la ligne d'admission 40 (pour purger les vapeurs de carburant), soit vers la ligne d'échappement 50 (pour réchauffer le catalyseur 51).

De manière préférentielle, les gaz aspirés par la pompe 34 pour réchauffer le catalyseur 51 comprennent uniquement de l'air frais (et pas de vapeurs de carburant). Le moteur à combustion interne 10 comporte alors à cet effet une ligne d'amenée 70 de gaz frais qui débouche dans la ligne de purge 30, en amont de la pompe 34. Cette ligne d'amenée 70 de gaz frais pourrait aspirer l'air frais directement dans l'atmosphère. Toutefois, elle prend ici naissance dans la ligne de purge, entre la vanne principale 61 et la ligne d'admission 40. Cette dernière comprenant un filtre à air, la ligne d'amenée 70 permet de prélever des gaz filtrés. Selon une autre variante, la ligne d'amenée pourrait prendre naissance directement dans la ligne d'admission 40.

Une vanne secondaire 71 est de préférence placée à la jonction entre la ligne d'amenée 70 et la ligne de purge 30, de manière à faire communiquer ces deux lignes que lorsque le catalyseur 51 doit être réchauffé.

La pompe 34 permet d'aspirer des gaz via la ligne d'amenée 70 pour les envoyer sur le moyen de chauffage 52 puis vers le catalyseur 51 via la ligne de soufflage 60. Ces gaz sont ainsi chauffés par le moyen de chauffage 52, ce qui leur permet ensuite de chauffer le catalyseur 51 jusqu'à sa plage de températures optimales.

La ligne de soufflage 60 comporte avantageusement une vanne anti-retour 62 permettant d'empêcher les gaz de la ligne d'échappement 50 de remonter vers la pompe 34.

Cette vanne anti-retour 62 est par exemple formée par un clapet mécanique à fonctionnement automatique.

En revanche, les vannes principale 61, secondaire 71 et bistable 32 sont pilotées électroniquement par un calculateur 90, lequel pilote également la pompe 34 et le moyen de chauffage 52.

La vanne principale 61 et la vanne secondaire 71 sont des électrovannes 3 voies. La vanne principale 61 comporte une seule entrée dans la ligne de purge 30, et deux sorties, une dans la ligne de purge 30 et une dans la ligne de soufflage 60. La vanne principale 61 permet de faire communiquer l'entrée dans la ligne de purge avec une seule des deux sorties. Lorsqu'une des deux sorties est ouverte, l'autre est fermée.

A l'inverse, la vanne secondaire 71 comporte deux entrées, une dans la ligne de purge 30 et une dans la ligne d'amenée 70, et une seule sortie dans la ligne de purge 30. La vanne secondaire permet de faire communiquer une des deux entrées dans la ligne de purge. Lorsqu'une des entrées est ouverte, l'autre est fermée.

En variante, les vannes principale 61 et secondaire 71 pourraient se présenter sous des formes différentes. Elles pourraient typiquement comporter un mécanisme d'obturation à boisseau ou à pointeau.

Ce calculateur 90 comporte à cet effet un processeur (ou un contrôleur ou un circuit de logique programmable), une mémoire et différentes interfaces d'entrée et de sortie.

Grâce à ses interfaces d'entrée, le calculateur est adapté à recevoir la température du catalyseur 51, laquelle est mesurée par un capteur de température adapté ou calculée.

Grâce à sa mémoire, le calculateur mémorise une application informatique, constituée de programmes d'ordinateur comprenant des instructions dont l'exécution par le processeur permet la mise en œuvre par le calculateur du procédé décrit ci-après. Dans la variante où il comporte une logique programmable, ses portes logiques sont programmées pour mettre en œuvre ce procédé.

En pratique, ce calculateur 90 est programmé pour que la pompe 34 puisse assurer soit une fonction de purge des vapeurs de carburant, soit une fonction de réchauffage du catalyseur 51.

Sur la figure 2, on a représenté schématiquement le cas où la pompe 34 permet d'envoyer de l'air chaud dans le catalyseur 51. Les vannes sont alors pilotées de manière à faire communiquer la ligne d'amenée de gaz frais 70 et la ligne de soufflage 60.

Sur la figure 1, on a représenté schématiquement le cas où la pompe 34 permet de purger les vapeurs de carburant. Les vannes sont pilotées de manière à faire communiquer la ligne de purge 30 et la ligne d'admission 40.

On peut décrire plus en détail le procédé mis en œuvre par le calculateur 90.

Préalablement à un démarrage à froid, c'est-à-dire, lorsque le catalyseur 51 est à une température inférieure à sa plage de températures optimales, le moteur à combustion interne 10 est piloté dans une configuration telle que schématisée dans la figure 2.

La vanne bistable 32 est alors ouverte, et les vannes principale 61 et secondaire 71 sont pilotées pour faire communiquer la ligne d'amenée 70 et la ligne de soufflage 60. Le moyen de chauffage 52 et la pompe 34 sont activés. Des gaz frais sont ainsi aspirés par la pompe 34 via la ligne d'admission 40, la ligne d'amenée 70, et une partie de la ligne de purge 30 puis envoyés sur le moyen de chauffage 52 via une partie de la ligne de purge 30 et la ligne de soufflage 60. Enfin, les gaz frais ainsi chauffés arrivent sur le catalyseur 51 et le réchauffent jusqu'à sa température optimale.

Dans cette configuration, la vanne secondaire 71 empêche les vapeurs de carburant d'être aspirés par la pompe 34 et la vanne principale 61 empêche les gaz frais aspirés par la pompe 34 de retourner vers la ligne d'admission 40.

Après le démarrage du moteur à combustion interne 10, et lorsque le catalyseur 51 est à sa température optimale, le calculateur 90 pilote le moteur dans une configuration telle que schématisée dans la figure 1.

Les vannes principale 61 et secondaire 71 sont pilotées pour faire communiquer la ligne de purge 30 avec la ligne d'admission 40. Le moyen de chauffage 52 est désactivé alors que la pompe 34 reste activée. Dans cette position, la pompe 34 permet d'aspirer les gaz qui s'échappent du réservoir de carburant 31 et qui sont stockés dans le canister 33, afin de les envoyer dans le moteur afin qu'ils y brûlent. Les gaz brûlés sont ensuite dépollués dans la ligne d'échappement 50 par le catalyseur 51 puis relâchés dans l'atmosphère.

Dans cette configuration, la vanne secondaire 71 empêche toute circulation de gaz dans la ligne d'amenée 70 et la vanne principale 61 empêche toute circulation de gaz dans la ligne de soufflage 60.

Lorsque le moteur à combustion interne 10 est ensuite arrêté après une utilisation, il existe des risques de présence de résidus de carburant dans la ligne de purge 30, et notamment du côté de la ligne d'admission 40. Si ces résidus restaient dans la ligne de purge 30, ils risqueraient d'être aspirés par la ligne d'amenée 70 puis envoyés vers le catalyseur 51 lors du prochain démarrage du moteur à combustion interne 10. Si la température du catalyseur 51 est en dessous de sa température optimale lors de ce nouveau démarrage comme lors d'un démarrage à froid, cela provoquerait une pollution de l'atmosphère. Pour éviter cette pollution, il est prévu de purger ces résidus de carburant après chaque arrêt du moteur à combustion interne 10, lorsque le catalyseur 51 est dans sa température optimale.

Pour cela, après chaque arrêt du moteur à combustion interne 10, lorsque la température du catalyseur 51 est comprise dans sa plage de températures optimales, le calculateur 90 pilote le moteur à combustion interne 10 dans la configuration telle que schématisée dans la figure 2 et décrite supra. Alors, les résidus sont aspirés et renvoyés au travers du catalyseur 51 où ils sont traités.

La présente invention n'est nullement limitée au mode de réalisation décrit et représenté, mais l'homme du métier saura y apporter toute variante conforme à l'invention.

A titre d'exemple, on pourrait prévoir que la vanne secondaire 71 soit remplacée par deux vannes bistables du type de la vanne bistable 32, une première située dans la ligne d'amenée 70 et l'autre située dans la ligne de purge 30, en amont de la jonction entre cette ligne et la ligne d'amenée 70. On pourrait d'ailleurs prévoir que la première de ces vannes soit formée par un simple clapet anti-retour.

Dans un autre mode de réalisation, le calculateur 90 pourrait comporter un régulateur de type proportionnel-intégral afin de commander le moyen de chauffage 52 pour permettre au catalyseur 51 d'atteindre sa température optimale.

## Revendications

1. Moteur à combustion interne (10) comprenant :
- un bloc-moteur (20) qui délimite une chambre de combustion,
- une ligne d'admission (40) de gaz frais dans la chambre de combustion,
- une ligne d'échappement (50) de gaz brûlés hors de la chambre de combustion, qui comprend un catalyseur (51) de dépollution des gaz brûlés et un moyen de chauffage (52) situé dans ou en amont dudit catalyseur (51),
- une ligne de soufflage (60) de gaz qui débouche dans la ligne d'échappement (50), en amont dudit moyen de chauffage (52),
- une ligne de purge (30) de vapeurs de carburant, qui prend naissance dans un réservoir de carburant (31), qui débouche dans la ligne d'admission (40) et qui comporte une pompe (34), la ligne de soufflage (60) prenant naissance dans la ligne de purge (30), en aval de ladite pompe (34),
- une vanne principale (61) à la jonction entre la ligne de soufflage (60) et la ligne de purge (30),
- une ligne d'amenée de gaz frais (70) qui débouche dans la ligne de purge (30), en amont de la pompe (34), et une autre vanne (71) située à la jonction entre la ligne d'amenée de gaz frais (70) et la ligne de purge (30), caractérisé "et en ce que ladite ligne d'amenée de gaz frais (70) prend naissance dans la ligne de purge (30), entre la vanne principale (61) et la ligne d'admission (40).

2. Moteur à combustion interne (10) selon la revendication 1, dans lequel il est prévu un calculateur (90) qui est adapté à piloter ladite vanne principale (61) entre au moins deux états, dont :
- un état permettant de faire communiquer le réservoir de carburant (31) avec la ligne d'admission (40) et de bloquer la circulation de gaz dans la ligne de soufflage (60), et
- un état permettant de faire communiquer la pompe (34) vers la ligne d'échappement (50) via la ligne de soufflage (60) et de bloquer la circulation de gaz entre le réservoir de carburant (31) et la ligne d'admission (40).

3. Moteur à combustion interne (10) selon l'une des revendications 1 à 2, dans lequel la ligne de soufflage (60) comporte une vanne anti-retour (62) adaptée à empêcher les gaz de refluer vers ladite vanne principale (61).

4. Moteur à combustion interne (10) selon l'une des revendications 1 à 3, dans lequel la ligne de purge (30) comporte une vanne bistable (32) adaptée à fermer ou laisser passer les gaz.

5. Moteur à combustion interne (10) selon l'une des revendications 1 à 4, dans lequel la vanne principale (61) est commandée électriquement.

6. Procédé de pilotage d'un moteur à combustion interne (10) conforme à l'une des revendications 1 à 5, **caractérisé en ce que** :
- préalablement à un démarrage à froid du moteur à combustion interne (10), le moyen de chauffage (52) et la pompe (34) sont activés et la vanne principale (61) est pilotée pour faire communiquer la pompe (34) avec la ligne d'échappement (50) via la ligne de soufflage (60), et
- après le démarrage du moteur à combustion interne (10), la vanne principale (61) est pilotée pour faire communiquer la pompe (34) avec la ligne d'admission (40).

7. Procédé selon la revendication 6 dans lequel, après l'arrêt du moteur à combustion interne (10), la pompe (34) est activée et la vanne principale (61) est pilotée pour faire communiquer la pompe (34) avec la ligne d'échappement (50) via la ligne de soufflage (60).

8. Véhicule automobile, **caractérisé en ce qu'**il comporte un moteur à combustion interne (10) conforme à l'une des revendications 1 à 5.

## Patentansprüche

1. Verbrennungsmotor (10), umfassend:
- einen Motorblock (20), der einen Brennraum begrenzt,
- eine Leitung (40) zum Einlassen von Frischgas in den Brennraum,
- eine Leitung (50) zum Ablassen von Abgasen aus dem Brennraum, die einen Katalysator (51) zum Reinigen der Abgase und ein Heizmittel (52) umfasst, das sich in oder stromaufwärtig von dem Katalysator (51) befindet,
- eine Gasblasleitung (60), die in die Ablassleitung (50) stromaufwärtig von dem Heizmittel (52) mündet,
- eine Kraftstoffdampfspülleitung (30), die in einem Kraftstofftank (31) entspringt, die in die Einlassleitung (40) mündet und die eine Pumpe (34) vorweist, wobei die Blasleitung (60) in der Spülleitung (30) stromabwärtig von der Pumpe (34) entspringt,
- ein Hauptventil (61) an der Verbindungsstelle zwischen der Blasleitung (60) und der Spülleitung (30),
- eine Frischgasversorgungsleitung (70), die in die Spülleitung (30) stromaufwärtig von der Pumpe (34) mündet, und ein anderes Ventil (71), das sich an der Verbindungsstelle zwischen der Frischgasversorgungsleitung (70) und der Spülleitung (30) befindet, **dadurch gekennzeichnet, dass** die Frischgasversorgungsleitung (70) in der Spülleitung (30) zwischen dem Hauptventil (61) und der Einlassleitung (40) entspringt.

2. Verbrennungsmotor (10) nach Anspruch 1, wobei ein Computer (90) vorgesehen ist, der angepasst ist, um das Hauptventil (61) zwischen mindestens zwei Zuständen zu steuern, von denen:
- ein Zustand es ermöglicht, den Kraftstofftank (31) mit der Einlassleitung (40) zu verbinden und die Gaszirkulation in der Blasleitung (60) zu blockieren, und
- ein Zustand es ermöglicht, die Pumpe (34) zu der Ablassleitung (50) hin über die Blasleitung (60) zu verbinden und die Gaszirkulation zwischen dem Kraftstofftank (31) und der Einlassleitung (40) zu blockieren.

3. Verbrennungsmotor (10) nach einem der Ansprüche 1 bis 2, wobei die Blasleitung (60) ein Rückschlagventil (62) vorweist, das angepasst ist, um zu verhindern, dass die Gase zu dem Hauptventil (61) hin zurückströmen.

4. Verbrennungsmotor (10) nach einem der Ansprüche 1 bis 3, wobei die Spülleitung (30) ein bistabiles Ventil (32) vorweist, das angepasst ist, um die Gase zu sperren oder durchzulassen.

5. Verbrennungsmotor (10) nach einem der Ansprüche 1 bis 4, wobei das Hauptventil (61) elektrisch betätigt wird.

6. Verfahren zum Steuern eines Verbrennungsmotors (10) nach einem der Ansprüche 1 bis 5, **dadurch gekennzeichnet, dass:**
- vor einem Kaltstart des Verbrennungsmotors (10) das Heizmittel (52) und die Pumpe (34) aktiviert werden und das Hauptventil (61) zum Verbinden der Pumpe (34) mit der Ablassleitung (50) über die Blasleitung (60) gesteuert wird, und
- nach dem Starten des Verbrennungsmotors (10) das Hauptventil (61) zum Verbinden der Pumpe (34) mit der Einlassleitung (40) gesteuert wird.

7. Verfahren nach Anspruch 6, wobei nach dem Stoppen des Verbrennungsmotors (10) die Pumpe (34) aktiviert wird und das Hauptventil (61) zum Verbinden der Pumpe (34) mit der Ablassleitung (50) über die Blasleitung (60) gesteuert wird.

8. Kraftfahrzeug, **dadurch gekennzeichnet, dass** es einen Verbrennungsmotor (10) nach einem der Ansprüche 1 bis 5 vorweist.

## Claims

1. Internal combustion engine (10) comprising:
- an engine block (20) which delimits a combustion chamber,
- an intake line (40) for the intake of fresh gas into the combustion chamber,
- an exhaust line (50) for burnt gases to leave the combustion chamber, which comprises a catalyst (51) for depolluting the burnt gases and a heating means (52) located in or upstream of said catalyst (51),
- a gas blowing line (60) which is connected to the exhaust line (50), upstream of said heating means (52),
- a purge line (30) for fuel vapors, which originates in a fuel tank (31), which is connected to the intake line (40) and which comprises a pump (34), the blowing line (60) originating in the purge line (30), downstream of said pump (34),
- a main valve (61) at the junction between the blowing line (60) and the purge line (30),
- a fresh gas supply line (70) which connects to the purge line (30), upstream of the pump (34), and a further valve (71) located at the junction between the fresh gas supply line (70) and the purge line (30),
**characterized in that** said fresh gas supply line (70) originates in the purge line (30), between the main valve (61) and the intake line (40).

2. Internal combustion engine (10) according to claim 1, wherein a computer (90) is provided for controlling said main valve (61) between at least two states, including:
- a state which allows the fuel tank (31) to be connected to the intake line (40) and the gas flow in the blowing line (60) to be blocked, and
- a state which allows the pump (34) to be connected to the exhaust line (50) via the blowing line (60) and the gas flow between the fuel tank (31) and the intake line (40) to be blocked.

3. Internal combustion engine (10) according to one of claims 1 to 2, wherein the blowing line (60) comprises a non-return valve (62) for preventing gases from flowing back towards said main valve (61).

4. Internal combustion engine (10) according to one of claims 1 to 3, wherein the purge line (30) comprises a bistable valve (32) for closing or for letting through the gases.

5. Internal combustion engine (10) according to one of claims 1 to 4, wherein the main valve (61) is electrically controlled.

6. Method for controlling an internal combustion engine (10) according to one of claims 1 to 5, **characterized in that:**
- prior to a cold start of the internal combustion engine (10), the heating means (52) and the pump (34) are activated and the main valve (61) is controlled to connect the pump (34) to the exhaust line (50) via the blowing line (60), and
- after starting the internal combustion engine (10), the main valve (61) is controlled to connect the pump (34) to the intake line (40).

7. Method according to claim 6, wherein, after the internal combustion engine (10) has stopped, the pump (34) is activated and the main valve (61) is controlled to connect the pump (34) to the exhaust line (50) via the blowing line (60).

8. Motor vehicle, **characterized in that** it comprises an internal combustion engine (10) according to one of claims 1 to 5.
